# EUROPEAN PATENT APPLICATION

(11) **EP 4 813 915 A1**
(43) Date of publication of application: **30.09.2026**
(21) Application number: 24893143.8
(22) Date of filing: 24.10.2024
(51) Int. Cl.: C01B 33/20, C09K 5/14

(54) **MODIFIER, MODIFIED THERMOCHEMICAL HEAT STORAGE MATERIAL AND MODULE, AND PREPARATION METHODS THEREFOR**

(30) Priority: 24.11.2023 CN 202311584850
(71) Applicant: Zhejiang University, Hangzhou, Zhejiang 310027 (CN)
(72) Inventor: XIAO, Gang, Hangzhou, Zhejiang 310027 (CN); HUANG, Yan, Hangzhou, Zhejiang 310027 (CN); ZHU, Peiwang, Hangzhou, Zhejiang 310027 (CN); CHEN, Dong, Hangzhou, Zhejiang 310027 (CN)
(74) Representative: Müller-Boré & Partner Patentanwälte PartG mbB
(86) International application number: PCT/CN2024/127029
(87) International publication number: WO 2025/107985

(57) **Abstract**

The present invention provides a modifier, a modified thermochemical heat storage material, a module, and preparation methods thereof. A general formula of the thermochemical heat storage material modifier is M_{y}SiO_{z}; wherein M is one or more selected from the group consisting of Co, Zn, Ni, Zr, Cu, Cr and Mg, and y and z are real numbers. By adding the modifier into a thermochemical heat storage material, no by-products are generated during the formation of the modified heat storage material. While ensuring the heat storage performance, the growth of crystals on the surface of the thermochemical heat storage material is inhibited, thereby enhancing the sintering resistance of the thermochemical heat storage material and the cycle stability in a long-term high-temperature environment.

## Description

### Field of the Invention

The present invention relates to the field of energy storage, and more specifically, to a modifier, a modified thermochemical heat storage material, a module, and preparation methods thereof.

### Background

Thermochemical heat storage utilizes reversible thermochemical reactions to achieve the storage and release of thermal energy. The energy storage density of thermochemical heat storage materials is generally 0.5 to 3 GJ/m³, which is about 8 to 10 times that of sensible heat materials and more than twice that of latent heat materials; in addition, it exhibits low heat loss during long-term storage, thus being considered one of the most promising thermal energy storage methods for the future.

High-temperature thermochemical energy storage technology based on metal oxides (such as cobalt, manganese, copper, iron, etc.) achieves the storage and release of energy through reduction/oxidation reactions between metal oxides in different valence states. The heat storage temperature can reach over 800 °C, and within a narrow temperature change range, the energy storage density can reach 300 to 1000 kJ/kg. Yet at the same time, problems such as unstable performance and short cycle life arise during long-term reactions, which severely restricts their development and application.

### Summary of the Invention

In view of the above problems, the present invention provides a modifier, a modified thermochemical heat storage material, a module, and preparation methods thereof. By adding the modifier into a thermochemical heat storage material, no by-products are generated during the formation of the modified heat storage material. While ensuring the heat storage performance of the thermochemical heat storage material, the growth of crystals on the surface of the thermochemical heat storage material can be inhibited, thereby enhancing the sintering resistance of the thermochemical heat storage material and the cycle stability in a long-term high-temperature environment.

A first aspect of the present invention provides a thermochemical heat storage material modifier, wherein a general formula of the thermochemical heat storage material modifier is M_{y}SiO_{z}; wherein M is one or more selected from the group consisting of Co, Zn, Ni, Zr, Cu, Cr and Mg, and y and z are real numbers.

According to this technical solution, new chemical bonds are generated between the thermochemical heat storage material modifier and the thermochemical heat storage material due to the interaction of charges, enabling the thermochemical heat storage material modifier to stably adhere to the surface of the thermochemical heat storage material relying on a pinning effect, thereby inhibiting the growth of crystal grains on the surface of the thermochemical heat storage material, preventing large-scale sintering caused by excessive grain growth of the thermochemical heat storage material, and improving the sintering resistance of the thermochemical heat storage material and the cycle stability.

In an optional technical solution of the present invention, a particle size of the thermochemical heat storage material modifier is not greater than 2 µm.

According to this technical solution, compared with the particle size of the thermochemical heat storage material, the particle size of the thermochemical heat storage material modifier is not greater than 2 µm, which is relatively small; a larger surface-area-to-volume ratio of the thermochemical heat storage material modifier facilitates its adsorption on the surface of the thermochemical heat storage material.

A second aspect of the present invention provides a method for preparing a thermochemical heat storage material modifier, comprising the following steps:
Step S11: providing a metal oxide corresponding to M and SiO₂, wherein M further comprises Mn, and the metal oxide corresponding to Mn is trimanganese tetraoxide (Mn₃O₄);
Step S12: sufficiently mixing the metal oxide corresponding to M and SiO₂ in proportion to obtain a first precursor; and
Step S13: taking out the first precursor obtained in Step S12 after calcining, and grinding into a powder to obtain a thermochemical heat storage material modifier.

According to this technical solution, preparation of the thermochemical heat storage material modifier by the solid phase synthesis method solid phase has the advantages of low cost, large output, simple equipment and preparation process, and high production efficiency.

In an optional technical solution of the present invention, a calcination temperature of the first precursor is 700-1100 °C, and a calcination time is 0.5-8 h.

According to this technical solution, the metal oxide corresponding to M and SiO₂ undergo a chemical change during calcination. By controlling the calcination temperature and the calcination time, the chemical reaction rate can be increased, thereby obtaining a single modifier silicate crystal. The combination of the modifier and the thermochemical heat storage material can inhibit the growth of crystal grains on the surface of the thermochemical heat storage material at high temperatures, thereby improving the sintering resistance of the thermochemical heat storage material.

A third aspect of the present invention provides a method for preparing the thermochemical heat storage material modifier as described above, wherein the preparation method is a co-precipitation method comprising the following steps:
Step S21: dispersing a silicon source in deionized water to form a homogeneous solution, and adding a base to the homogeneous solution to adjust a pH value of a suspension to be alkaline;
Step S22: adding a metal salt corresponding to M to the homogeneous solution obtained in Step S21 to obtain a precipitate and a supernatant; and
Step S23: filtering and separating the supernatant and the precipitate obtained in Step S22, washing a filter residue obtained with deionized water and ethanol, and drying the washed filter residue at room temperature to obtain a thermochemical heat storage material modifier.

According to this technical solution, preparation of the thermochemical heat storage material modifier using the co-precipitation method can achieve high-purity separation of the thermochemical heat storage material modifier, and has high selectivity and applicability. In addition, by adopting a corresponding solid base in Step S21 to adjust the pH of the suspension to be alkaline, hydrolysis of the silicon source (such as sodium silicate) can be avoided, and at the same time, the introduction of new impurities is prevented, thereby improving the purity of the thermochemical heat storage material modifier.

A fourth aspect of the present invention provides a modified thermochemical heat storage material, comprising:
a primary heat storage material, with a general formula: (Mn₁₋ₓFeₓ)₂O₃; and
the thermochemical heat storage material modifier as described above;
wherein a general formula of the modified thermochemical heat storage material is (Mn₁₋ₓFeₓ)₂O₃ · nM_{y}SiO_{z}, wherein 0.1 < x < 0.4, 0 < n < 0.4, and the thermochemical heat storage material modifier adheres to a surface of the primary heat storage material.

According to this technical solution, different types of metal oxide heat storage materials are compatible with different modifiers. For a manganese-iron composite metal oxide heat storage material, by adopting a silicate corresponding to the metal material M and controlling the value range of n, the growth of crystal grains on the surface of the manganese-iron composite metal oxide heat storage material can be better inhibited, which ensures that the modified thermochemical heat storage material has excellent heat storage performance, desirable sintering resistance, and good cycle performance.

In an optional technical solution of the present invention, a value range of n is 0.01-0.05.

According to this technical solution, by controlling a molar ratio n of the thermochemical heat storage material modifier to the primary heat storage material within a specified range, it can be ensured that an adhesion amount of the thermochemical heat storage material modifier on the surface of the primary heat storage material is within a specified range (i.e., the adhesion amount is neither too much nor too little). This guarantees the heat storage performance of the modified thermochemical heat storage material while inhibiting the growth of crystal grains on the surface of the primary heat storage material and saving the dosage of the thermochemical heat storage material modifier.

A fifth aspect of the present invention provides a method for preparing the modified thermochemical heat storage material as described above, comprising the following steps:
Step S31: providing a manganese-iron composite metal oxide heat storage material;
Step S32: providing the thermochemical heat storage material modifier as described above; and
Step S33: mixing the manganese-iron composite metal oxide heat storage material obtained in Step S31 and the thermochemical heat storage material modifier in Step S32 in a predetermined proportion to obtain a modified manganese-iron composite metal oxide heat storage material.

According to this technical solution, preparation of the modified thermochemical heat storage material using a solid phase synthesis method has the advantages of low cost, large output, simple equipment and preparation process, and high production efficiency.

In an optional technical solution of the present invention, a preparation method of the manganese-iron composite metal oxide heat storage material comprises:
S41: sufficiently mixing trimanganese tetraoxide and iron(III) oxide to obtain a second precursor; and
S42: taking out the second precursor after high-temperature calcination, and grinding into a powder to obtain a manganese-iron composite metal oxide heat storage material.

According to this technical solution, a solid interface between trimanganese tetraoxide and iron(III) oxide undergoes contact, reaction, nucleation, and crystal growth reaction, ultimately obtaining the manganese-iron composite metal oxide heat storage material. This preparation method has low cost, large output, simple equipment and preparation process, and high production efficiency.

Using trimanganese tetraoxide (Mn₃O₄) as a manganese source to prepare the manganese-iron composite metal oxide via the high-temperature solid phase synthesis method achieves better synthesis effects compared to using Manganese(III) oxide (Mn₂O₃) under the same conditions. This is because the principle of the high-temperature solid phase synthesis method is to subject the mixed raw materials to high-temperature conditions (usually between 600 °C and 1000 °C). At this temperature, the solid raw materials undergo a chemical reaction, and metal ions in the raw materials begin to migrate and rearrange to form a new crystal structure. The crystal structure of Mn₂O₃ corresponds to an orthorhombic crystal system, and its crystal lattice stability is relatively high, meaning the lattice structure is not easily destroyed. Therefore, the composite effect with Fe₂O₃ is poor during the synthesis stage, which affects subsequent oxidation-reduction reactions. In contrast, Mn₃O₄ is composed of Mn²⁺ and Mn³⁺ ions and has a complex crystal structure; therefore, structural changes are more prone to occur under certain conditions, and the chemical reaction with Fe₂O₃ is more sufficient, thereby obtaining a more ideal manganese-iron composite metal oxide heat storage material.

The present invention provides a method for preparing a modified thermochemical heat storage module, comprising the following steps:
Step S51: charging Mn₃O₄ and Fe₂O₃ powders into a mixer at a molar ratio of 8:3 to 1:1 and blending uniformly, then calcining the uniformly blended Mn₃O₄ and Fe₂O₃ powders to obtain a primary heat storage material, cooling the calcined primary heat storage material, followed by grinding and sieving to a desired particle size;
Step S52: charging Mn₃O₄ and SiO₂ powders into a mixer at a molar ratio of 1:6 to 7:3 and blending uniformly, then calcining the uniformly blended Mn₃O₄ and SiO₂ powders to obtain a thermochemical heat storage material modifier, cooling the calcined thermochemical heat storage material modifier, followed by grinding and sieving to a desired particle size;
Step S53: uniformly blending the primary heat storage material obtained in Step S51 and the thermochemical heat storage material modifier obtained in Step S52 in a predetermined proportion to obtain a modified thermochemical heat storage material;
Step S54: providing a binder, and uniformly mixing the binder with the modified thermochemical heat storage material in Step S53;
Step S55: extruding the modified thermochemical heat storage material and the binder uniformly mixed in Step S54 to form a thermochemical heat storage module;
Step S56: performing heat exchange between waste heat generated from the calcination in Step S51 and Step S52 and a heat exchanger, wherein the heat exchanger absorbs heat generated by the calcination and transfers it to the thermochemical heat storage module in Step S55, thereby heating the thermochemical heat storage module to a predetermined temperature; and
Step S57: calcining the thermochemical heat storage module obtained in Step S56.

### Summary of the Figures

FIG. 1 is an SEM image of modifier S1 in an embodiment of the present invention.
FIG. 2 is an SEM image of modifier S2 in an embodiment of the present invention.
FIG. 3 is an SEM image of modifier S3 in an embodiment of the present invention.
FIG. 4 is an X-ray diffraction spectrum of modifier S1 in an embodiment of the present invention.
FIG. 5 is an X-ray diffraction spectrum of modifier S2 in an embodiment of the present invention.
FIG. 6 is an X-ray diffraction spectrum of modifier S3 in an embodiment of the present invention.
FIG. 7 is a thermogravimetric analysis graph of sample G1 after 100 cycles in an embodiment of the present invention.
FIG. 8 is a thermogravimetric analysis graph of sample G2 after 100 cycles in an embodiment of the present invention.
FIG. 9 is a thermogravimetric analysis graph of sample G3 after 100 cycles in an embodiment of the present invention.
FIG. 10 is a thermogravimetric analysis graph of sample G4 after 100 cycles in an embodiment of the present invention.
FIG. 11 is a schematic flow chart of a preparation method of a modified thermochemical heat storage module in an embodiment of the present invention.

Reference Numerals: First mixer 11; First calcination furnace 12; First heat exchanger 13; First grinder 14; First sieve 15; Second mixer 21; Second calcination furnace 22; Second heat exchanger 23; Second grinder 24; Second sieve 25; Third mixer 31; Extruder 32; Third heat exchanger 33; Third calcination furnace 34; Storage tank 35.

### Detailed Description of the Invention

The technical solutions in the embodiments of the present invention will be clearly and completely described below with reference to the accompanying drawings in the embodiments of the present invention. Obviously, the described embodiments are merely a part of the embodiments of the present invention, and not all of the embodiments. Based on the embodiments in the present invention, all other embodiments obtained by a person of ordinary skill in the art without creative efforts shall fall within the protection scope of the present invention.

### 1.Material Preparation

### 1.1 Preparation of thermochemical heat storage material modifier

### 1.1.1 Solid phase synthesis method

Step S11: providing a metal oxide corresponding to M and SiO₂, wherein M is one or more selected from the group consisting of Co, Zn, Ni, Zr, Cu, Cr and Mg, y and z are real numbers, M further comprises Mn, and the metal oxide corresponding to Mn is trimanganese tetraoxide;
Step S12: sufficiently mixing the metal oxide corresponding to M and SiO₂ in proportion to obtain a first precursor; and
Step S13: taking out the first precursor obtained in Step S12 after calcining, and grinding into a powder to obtain a thermochemical heat storage material modifier.

Specifically, taking a manganese silicate modifier as an example: 0.01 mol of trimanganese tetraoxide and 0.03 mol of silicon dioxide are placed in a ball milling jar, and mixed using a ball mill for 30 min to obtain a first precursor; the first precursor is placed in a muffle furnace and calcined at 1100 °C for 4 h. After cooling, it is ground and sieved to obtain a powder with a particle size of less than 2 µm, thereby obtaining a manganese silicate modifier S3.

In a preferred embodiment of the present invention, the particle size of the thermochemical heat storage material modifier is 10 nm to 2 µm. More preferably, the particle size of the thermochemical heat storage material modifier is 60 to 400 nm. In some embodiments, the particle size of the thermochemical heat storage material modifier may also be 600 to 800 nm, 900 nm, 1500 nm, 1800 nm, etc.

It should be noted that a person skilled in the art can adjust the calcination temperature to 700-1100 °C and the calcination time to 0.5-8 h according to actual needs, which is not limited to the examples described in this embodiment.

### 1.1.2 Co-precipitation method

0.05 mol of Na₂SiO₃ · 9H₂O is dissolved in deionized water to obtain a homogeneous solution, and solid NaOH (or aqueous ammonia) is added to adjust the pH value of the homogeneous solution to 8 to 10. 0.1 mol of M(NO₃)ₘ (M is one or more selected from the group consisting of Co, Zn, Ni, Zr, Cu, Cr and Mg) is rapidly added to the homogeneous solution to form a precipitate, and stirring is continued for 2 h (the stirring temperature is preferably 25-40 °C, and the stirring time is preferably 0.5-2 h). The filter residue is obtained by filtration, washed multiple times with deionized water and ethanol, and dried at room temperature for 12 h (the drying time may be 6-24 h, which can be adjusted by a person skilled in the art according to actual situations), thereby obtaining the silicate modifier additive powder M_{y}SiO_{z}.

Nitrate M(NO₃)ₘ is selected as the metal cation source. Due to the differences in crystal structures and chemical bond properties between nitrates and chlorides, nitrate ions have stronger polarity towards water, leading to a higher solubility of nitrates in water, which facilitates the reaction to proceed more sufficiently. In addition, chlorides are generally more toxic than nitrates, especially chlorides of some metal ions; therefore, utilizing nitrates as the metal cation source is safer and more reliable. Adjusting the pH value of the solution with NaOH is, on one hand, to avoid the introduction of new impurities, and on the other hand, to prevent the hydrolysis of sodium silicate.

The thermochemical heat storage material modifier prepared by the co-precipitation method is an amorphous modifier. The amorphous form of the modifier enhances its adsorption ability on the surface of the primary heat storage material, while the disordered atomic arrangement of the amorphous material also provides more compatibility for the electronic structure of the modified thermochemical heat storage material.

### 1.2 Preparation of thermochemical heat storage material

0.8 mol of reagent-grade Mn₃O₄ and 0.3 mol of reagent-grade Fe₂O₃ are weighed respectively and placed in a ball mill, and ball-milled for 30 min for sufficient blending. The blending time is preferably 0.5-2 h. Subsequently, the mixture is placed in a muffle furnace and calcined at 1000 °C for 8 h. After cooling, it is taken out, ground, and sieved to obtain a black primary heat storage material in powder form: (Mn_{0.8}Fe_{0.2})₂O₃.

Mn₃O₄ and Fe₂O₃ are uniformly mixed first. The mixing method may utilize a ball mill, a blender, or a rotary kiln, etc., which is not limited herein. Then, the uniformly mixed powder is composited at a high temperature. Under high-temperature conditions, the solid interfaces in uniform contact undergo contact, reaction, nucleation, and crystal growth reaction, ultimately obtaining the primary heat storage material of manganese-iron composite metal oxide. This preparation method has low cost, large output, simple equipment and preparation process, and high production efficiency.

Using Mn₃O₄ as a manganese source to prepare the composite manganese-iron metal oxide via the high-temperature solid phase synthesis method achieves better synthesis effects compared to using Mn₂O₃ under the same conditions. This is because the principle of the high-temperature solid phase synthesis method is to subject the mixed raw materials to high-temperature conditions (usually between 600 °C and 1000 °C), at which temperature the solid raw materials undergo a chemical reaction. At this temperature, the metal ions in the raw materials begin to migrate and rearrange to form a new crystal structure. The crystal structure of Mn₂O₃ corresponds to an orthorhombic crystal system, and its crystal lattice stability is relatively high, meaning the lattice structure is not easily destroyed. Therefore, the composite effect with Fe₂O₃ is poor during the synthesis stage, which affects subsequent oxidation-reduction reactions. In contrast, Mn₃O₄ is composed of Mn²⁺ and Mn³⁺ ions and has a complex crystal structure; therefore, structural changes are more prone to occur under certain conditions, and the chemical reaction with Fe₂O₃ is more sufficient, thereby obtaining a manganese-iron composite metal oxide heat storage material with better performance.

### 1.3 Preparation of modified thermochemical heat storage material

4.95 g of the manganese-iron composite metal oxide and 0.05 g of the thermochemical heat storage material modifier are placed together in a ball milling jar, ball-milled and mixed for 30 min, and then taken out to obtain a modified manganese-iron composite metal oxide heat storage material.

Depending on the type of thermochemical heat storage material modifier selected and the preparation method, the following specific examples can be obtained:
Amorphous cobalt silicate CoSiO₃ synthesized by the co-precipitation method is selected as thermochemical heat storage material modifier S1, with a doping mass ratio of 0.01. The obtained modified manganese-iron composite metal oxide heat storage material G1 is (Mn_{0.8}Fe_{0.2})₂O₃ · 0.01CoSiO₃.

Amorphous copper silicate CuSiO₃ synthesized by the co-precipitation method is selected as thermochemical heat storage material modifier S2, with a doping mass ratio of 0.01. The obtained modified manganese-iron composite metal oxide heat storage material G2 is (Mn_{0.8}Fe_{0.2})₂O₃ · 0.01CuSiO₃.

Manganese silicate MnSiO₃ synthesized by the solid phase synthesis method is selected as thermochemical heat storage material modifier S3, with a doping mass ratio of 0.01. The obtained modified manganese-iron composite metal oxide heat storage material G3 is (Mn_{0.8}Fe_{0.2})₂O₃ · 0.01MnSiO₃(sp).

A thermochemical heat storage material G4 prepared by the solid phase synthesis method without adding a thermochemical heat storage material modifier is: (Mn_{0.8}Fe_{0.2})₂O₃.

In this embodiment, during the synthesis process of the uniformly mixed primary heat storage material in powder form and the amorphous silicate, the amorphous silicate additive can be uniformly and firmly attached to the surface of the primary heat storage material. Because the particle size of the amorphous silicate additive is not greater than 2 µm, it has a smaller particle size compared with the manganese-iron composite metal oxide heat storage material prepared by the solid phase synthesis method (the ratio of the particle size of the amorphous silicate modifier to the particle size of the primary heat storage material particles is 0.001 to 0.25; preferably, the range of the particle size ratio of the two is 0.1 to 0.25). Furthermore, a larger surface-area-to-volume ratio facilitates its adsorption on the surface of the heat storage material, because the high specific surface area of small particles makes the charge effect more prominent, resulting in a stable interaction with the primary heat storage material, blocking the agglomeration among the large particles of the primary heat storage material during the oxidation-reduction process, and thus effectively improving the sintering phenomenon of the primary heat storage material that occurs under high-temperature reaction conditions, obtaining a long-life/high-performance modified manganese-iron composite metal oxide heat storage material.

### 2.Material Characterization

The following experiments are utilized to characterize the modified manganese-iron composite metal oxide heat storage material prepared by the above preparation methods.

The equipment utilized for high-temperature calcination is a KSL-1200X box-type furnace from Hefei Kejing Company, with a heating rate of 1 to 10 °C/min. The scanning electron microscope (SEM) utilized is a Zeiss Sigma 300 field emission scanning electron microscope from Germany. X-ray diffraction (XRD) analysis is performed using an X-pert Powder X-ray diffractometer produced by PANalytical from the Netherlands. Thermogravimetric analysis (TGA) is performed using a TGA/DSC3+ synchronous thermal analyzer produced by Mettler-Toledo from Switzerland.

### 2.1 Scanning Electron Microscope

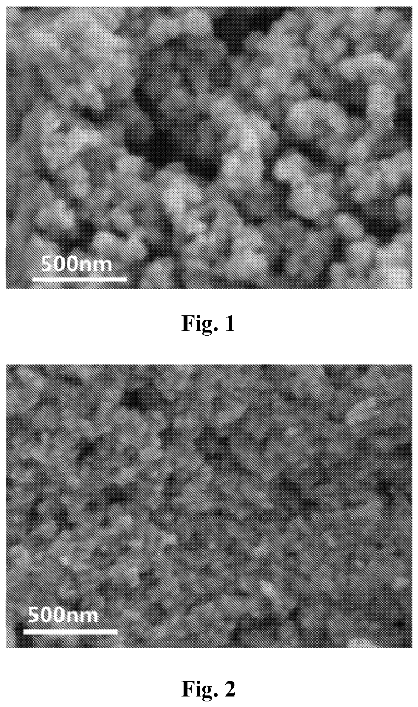

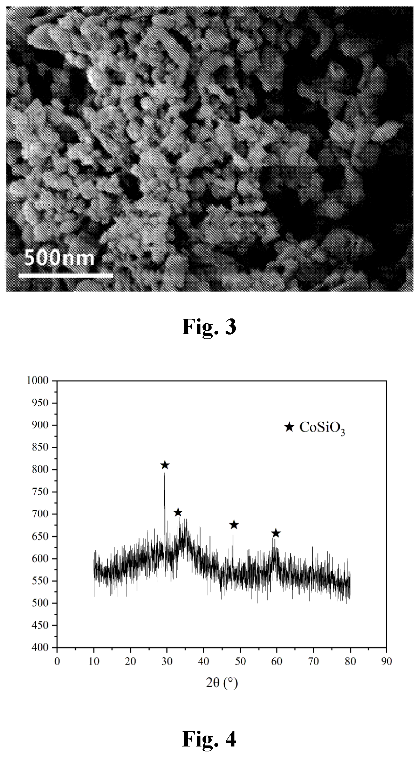

FIG. 1, FIG. 2, and FIG. 3 are SEM images of the modified additives S1-S3 in the present embodiment, respectively. As shown in FIG. 1 and FIG. 2, the particle size of the amorphous silicate modifier is relatively small, and the particle structure is extremely loose. Therefore, compared with the bulk structure of the crystalline modifier in FIG. 3, the amorphous silicate additive can better adhere to the surface of the manganese-iron composite metal oxide heat storage material, thereby forming a barrier among the manganese-iron composite metal oxide particles, preventing agglomeration among the manganese-iron composite metal oxide particles, and improving the cyclic heat storage performance of the modified manganese-iron composite metal oxide heat storage material.

### 2.2 X-ray Diffraction

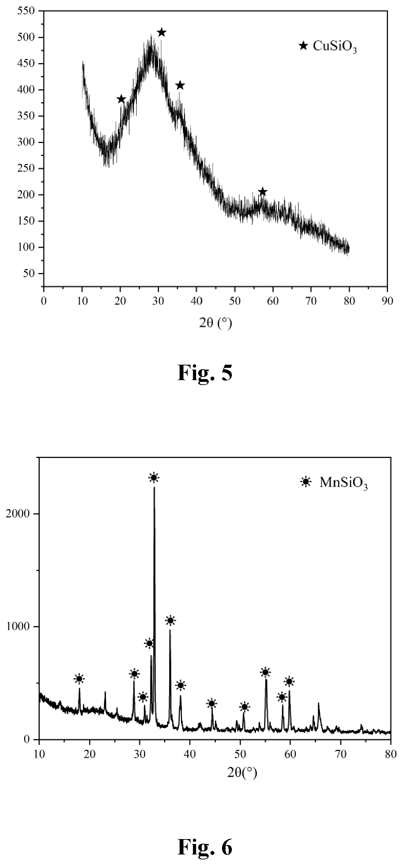

FIG. 4 and FIG. 5 correspond to the X-ray diffraction patterns of modifiers S1-S2 in the present embodiment, respectively. The horizontal axis is twice the incident angle of the X-ray, and the vertical axis is the diffraction intensity. It can be seen from FIG. 4 and FIG. 5 that the modifiers S1 and S2 have typical amorphous diffraction peaks, indicating that the samples are amorphous substances. Meanwhile, characteristic peaks of corresponding silicates are also present in the figures, indicating that the corresponding amorphous silicate modified additives are successfully prepared by utilizing the method of the embodiment. FIG. 6 corresponds to the manganese silicate additive S3 prepared by the solid phase synthesis method, which crystallizes well at high temperatures, forming clear and intense silicate diffraction peaks, indicating that a silicate is successfully synthesized by utilizing the corresponding metal oxide and silicon dioxide at high temperatures.

### 2.3 Thermogravimetric Analysis

The following experiment is utilized to determine the heat storage performance of the modified manganese-iron composite metal oxide heat storage material. The modified manganese-iron composite metal oxide heat storage materials (samples G1-G3) and a comparative sample of manganese-iron composite metal oxide heat storage material G4 are placed on a thermochemical experimental platform to conduct thermal cycle experiments.

The temperature control program is as follows: first heating from room temperature to 700 °C, then heating from 700 °C to 1000 °C and holding for 30 minutes, then cooling from 1000 °C to 700 °C and holding for 30 minutes; both the heating and cooling rates are 10 °C/min, and the air flow rate is 1 L/min (pO₂=0.21). The process of heating to 1000 °C and then cooling down to 700 °C is considered as one cycle. After continuous operation for 100 cycles, heating is stopped, and after the equipment is completely cooled, 8-11 mg of the modified manganese-iron composite metal oxide heat storage material sample is taken for thermogravimetric analysis. The heating rate is 20 °C/min, the cooling rate is 10 °C/min, and the air flow rate is 50 ml/min (pO₂=0.21).

The temperature control program for the thermogravimetric analysis of samples G1, G2, G3, and G4 is: first heating from 50 °C to 1000 °C and holding for 10 minutes; then cooling from 1000 °C to 700 °C.

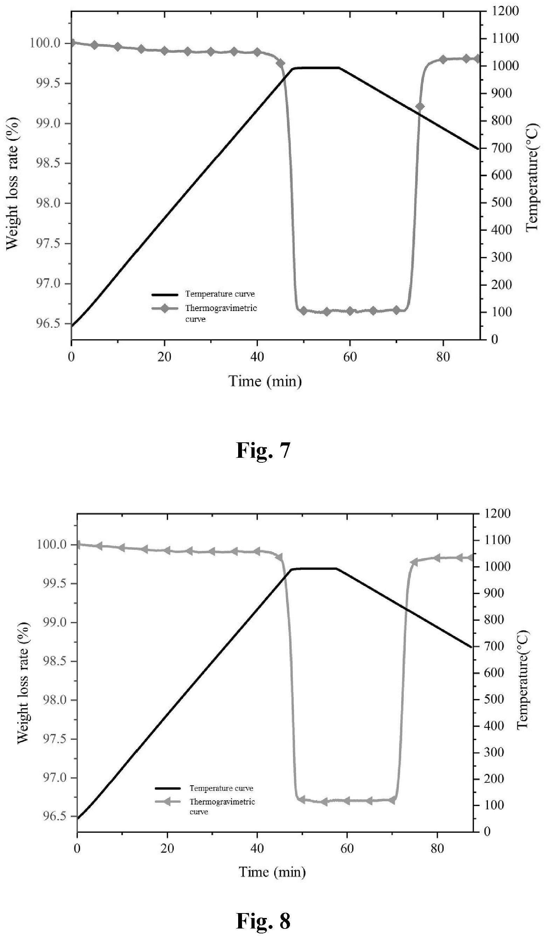

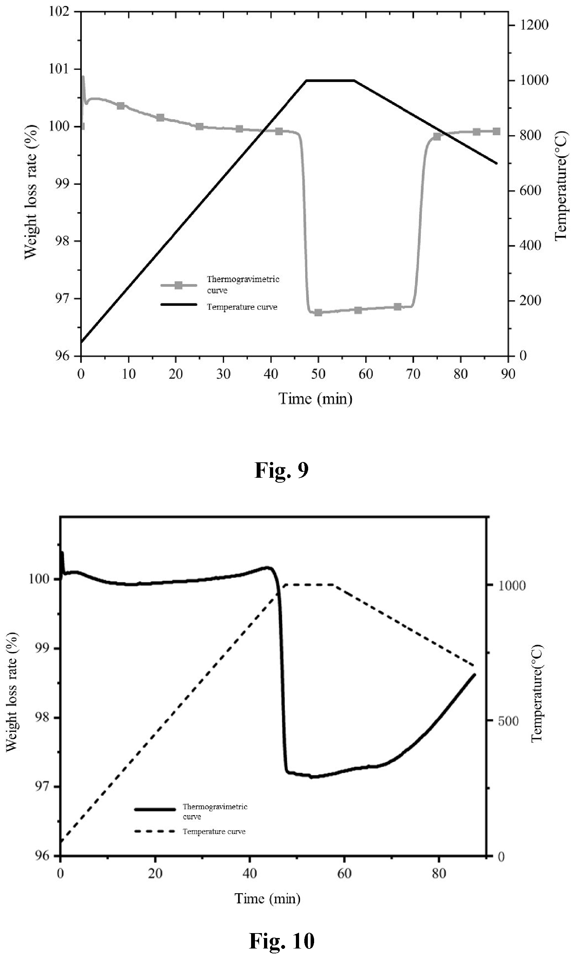

The experimental results are shown in Table 1 and FIGs. 7-10. Table 1 shows the thermogravimetric analysis results of samples G1-G4 after the thermal cycle experiments, and FIGs. 7-10 are thermogravimetric analysis curves of samples G1-G4 after the cycles, respectively.

**Table 1**

| Sample | Additive Details | | Thermal Cycle Experiment | | Cycle Experiment Results | |
|---|---|---|---|---|---|---|
| | Mass Ratio | Additive Name | Cycle Temperature | Number of Cycles | Reductio n Rate | Re-oxidation Rate |
| G1 | 1% | Amorphous CoSiO₃ | 700↔1000 | 100 | 96.12% | 93.63% |
| G2 | 1% | Amorphous CuSiO₃ | 700↔1000 | 100 | 95.99% | 93.53% |
| G3 | 1% | Solid phase synthesis MnSiO₃ | 700↔1000 | 100 | 99.31% | 99.12% |
| G4 | 0% | None | 700↔1000 | 100 | 90.13% | < 40% |

After multiple cyclic reactions, heat storage materials are prone to crystal growth, causing coarsening and densification of the microstructure. Moreover, sintering leads to agglomeration of microscopic particles, a reduction in specific surface area, difficulties in oxygen mass transfer, and severe deterioration of reaction characteristics, which are significant factors affecting the decline in the cycle stability of thermochemical heat storage materials. Thermogravimetric analysis results indicate that compared with the re-oxidation rate (less than 40%) and reduction rate (90.13%) of the thermochemical heat storage material without a modifier, the thermochemical heat storage material modified by either a crystalline or an amorphous thermochemical heat storage material modifier exhibits significantly increased re-oxidation rates and reduction rates after 100 thermal cycles, indicating that the modified thermochemical heat storage material exhibits better cycle performance.

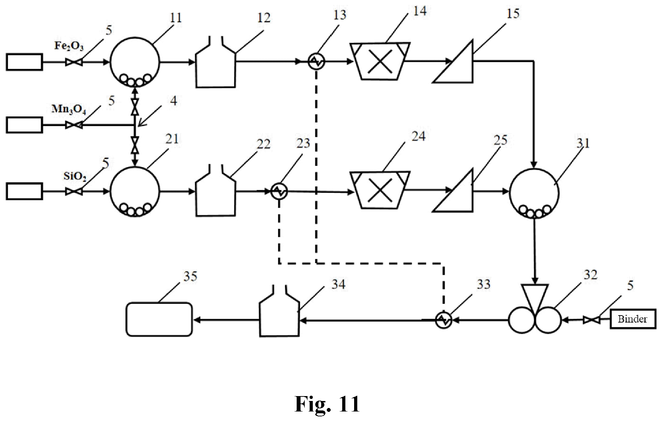

As shown in FIG. 11, an embodiment of the present invention further provides an industrial production method for a thermochemical heat storage module, comprising the following processes:
Mn₃O₄ and Fe₂O₃ powders are charged into a first mixer 11 for blending at a molar ratio of 8:3. After being uniformly blended, they are introduced into a first calcination furnace 12 for high-temperature calcination at 1000 °C. After being cooled to room temperature by heat exchange via a first heat exchanger 13, the mixture is introduced into a first grinder 14 and a first sieve 15 for grinding and sieving to a particle size of no more than 2 micrometers, thereby obtaining a manganese-iron composite metal oxide heat storage material.

Mn₃O₄ and SiO₂ powders are charged into a second mixer 21 for blending at a molar ratio of 1:3. After being uniformly blended, they are introduced into a second calcination furnace 22 for high-temperature calcination at 1100 °C. After being cooled to room temperature by heat exchange via a second heat exchanger 23, the mixture is introduced into a second grinder 24 and a second sieve 25 for grinding and sieving to a particle size of no more than 2 micrometers, thereby obtaining a manganese silicate modifier.

The above manganese-iron composite metal oxide heat storage material and manganese silicate modifier are charged into a third mixer 31 for sufficient blending at a mass ratio of 99:1. After being uniformly blended, they are mixed with a binder, and a thermochemical heat storage module is extruded and formed utilizing an extruder 32. The mass of the thermochemical heat storage module is not less than 100 g. Afterwards, it is slowly heated to 800 °C via a third heat exchanger 33 and introduced into a third calcination furnace 34 for calcination. The compressive strength of the thermochemical heat storage module is greater than 0.2 MPa. After the thermochemical heat storage module is calcined, it is placed into a storage tank 35 for storage and subsequent heat storage/release applications. It should be noted that in the preparation process of the manganese-iron composite metal oxide heat storage material, the value range of the molar ratio of the Mn₃O₄ and Fe₂O₃ powders is 8:3 to 1:1, and the value range of the molar ratio of the Mn₃O₄ and SiO₂ powders is 1:6 to 7:3. The dosage used in industrial production is on a tonnage level. Under these molar ratio parameters, the obtained thermochemical heat storage module exhibits desirable heat storage performance and good cycle performance.

Correspondingly, the present embodiment provides a production system for a thermochemical heat storage module, comprising: a thermochemical heat storage material production apparatus, a modifier production apparatus, and a modified thermochemical heat storage material production apparatus. The thermochemical heat storage material production apparatus comprises a first mixer 11, a first calcination furnace 12, a first heat exchanger 13, a first grinder 14, and a first sieve 15 disposed sequentially;
the modifier production apparatus comprises a second mixer 21, a second calcination furnace 22, a second heat exchanger 23, a second grinder 24, and a second sieve 25 disposed sequentially;
a Mn₃O₄ supply pipeline 4 is connected between the first mixer and the second mixer for supplying Mn₃O₄ to the first mixer 11 and the second mixer 21;
the modified thermochemical heat storage material production apparatus comprises a third mixer 31, an extruder 32, a third heat exchanger 33, a third calcination furnace 34, and a storage tank 35 disposed sequentially. Wherein,
outlets of the first sieve 15 and the second sieve 25 are communicated with the third mixer 31, and an outlet of the third mixer 31 is communicated with the extruder 32, the thermochemical heat storage module at the outlet of the extruder 32 exchanges heat with the third heat exchanger 33, a high-temperature heat source in the third heat exchanger 33 comes from waste calcination heat at the outlets of the first heat exchanger 13 and the second heat exchanger 23, the heat-exchanged thermochemical heat storage module enters the third calcination furnace 34 for calcination, and the calcined thermochemical heat storage module enters the storage tank 35 for storage and future use.

It should be noted that the production system further comprises an on-off valve 5, etc., utilized for controlling the flow rates of Mn₃O₄, Fe₂O₃, SiO₂, binder, etc. The arrows pointing in the flow chart indicate the steps of the production process.

The above embodiments are merely preferred embodiments of the present invention and are not intended to limit the present invention. Any modifications, equivalent substitutions, and improvements made within the spirit and principles of the present invention shall fall within the protection scope of the present invention.

## Claims

1. A thermochemical heat storage material modifier, **characterized in that** a general formula of the thermochemical heat storage material modifier is M_{y}SiO_{z}; wherein M is one or more selected from the group consisting of Co, Zn, Ni, Zr, Cu, Cr and Mg, and y and z are real numbers.

2. The thermochemical heat storage material modifier according to claim 1, **characterized in that** a particle size of the thermochemical heat storage material modifier is not greater than 2 µm.

3. A method for preparing the thermochemical heat storage material modifier according to claim 1 or 2, **characterized in** comprising the following steps:
Step S11: providing a metal oxide corresponding to M and SiO₂, wherein M further comprises Mn, and the metal oxide corresponding to Mn is trimanganese tetraoxide (Mn₃O₄);
Step S12: sufficiently mixing the metal oxide corresponding to M and SiO₂ in proportion to obtain a first precursor; and
Step S13: taking out the first precursor obtained in step S12 after calcining, and grinding into a powder to obtain a thermochemical heat storage material modifier.

4. The method for preparing the thermochemical heat storage material modifier according to claim 3, **characterized in that** a calcination temperature of the first precursor is 700-1100 °C, and a calcination time is 0.5-8 h.

5. A method for preparing the thermochemical heat storage material modifier according to claim 1 or 2, **characterized in that** the preparation method is a co-precipitation method, and the co-precipitation method comprises the following steps:
Step S21: dispersing a silicon source in deionized water to form a homogeneous solution, and adding a base to the homogeneous solution to adjust a pH value of a suspension to be alkaline;
Step S22: adding a metal salt corresponding to M into the homogeneous solution obtained in step S21 to obtain a precipitate and a supernatant; and
Step S23: filtering and separating the supernatant and the precipitate obtained in Step S22 to obtain a filter residue, washing the obtained filter residue with deionized water and ethanol, and drying the washed filter residue at room temperature to obtain a thermochemical heat storage material modifier.

6. A modified thermochemical heat storage material, **characterized in** comprising:
a primary heat storage material, wherein a general formula of the primary heat storage material is:
(Mn₁₋ₓFeₓ)₂O₃;
and
the thermochemical heat storage material modifier according to any one of claim 1;
wherein a general formula of the modified thermochemical heat storage material is (Mn₁₋ₓFeₓ)₂O₃ · nM_{y}SiO_{z}, wherein 0.1 < x < 0.4, 0 < n < 0.4, and the thermochemical heat storage material modifier adheres to a surface of the primary heat storage material.

7. The modified thermochemical heat storage material according to claim 6, **characterized in that** a value range of n is 0.01-0.05.

8. A method for preparing the modified thermochemical heat storage material according to claim 6 or 7, **characterized in** comprising the following steps:
Step S31: providing a manganese-iron composite metal oxide heat storage material;
Step S32: providing the thermochemical heat storage material modifier according to any one of claims 1 to 6; and
Step S33: mixing the manganese-iron composite metal oxide heat storage material obtained in step S31 and the thermochemical heat storage material modifier in step S32 in a predetermined proportion to obtain the modified manganese-iron composite metal oxide heat storage material.

9. The method for preparing the modified thermochemical heat storage material according to claim 8, **characterized in that** a preparation method of the manganese-iron composite metal oxide heat storage material comprises:
S41: sufficiently mixing trimanganese tetraoxide and iron(III) oxide to obtain a second precursor; and
S42: taking out the second precursor after high-temperature calcination, and grinding into a powder to obtain a manganese-iron composite metal oxide heat storage material.

10. A method for preparing a modified thermochemical heat storage module, **characterized in** comprising the following steps:
Step S51: charging Mn₃O₄ and Fe₂O₃ powders into a mixer at a molar ratio of 8:3 to 1:1 and blending uniformly, then calcining the uniformly blended Mn₃O₄ and Fe₂O₃ powders to obtain a primary heat storage material, cooling the calcined primary heat storage material, followed by grinding and sieving to a desired particle size;
Step S52: charging Mn₃O₄ and SiO₂ powders into a mixer at a molar ratio of 1:6 to 7:3 and blending uniformly, then calcining the uniformly blended Mn₃O₄ and SiO₂ powders to obtain a thermochemical heat storage material modifier, cooling the calcined thermochemical heat storage material modifier, followed by grinding and sieving to a desired particle size;
Step S53: uniformly blending the primary heat storage material obtained in Step S51 and the thermochemical heat storage material modifier obtained in Step S52 in a predetermined proportion to obtain a modified thermochemical heat storage material;
Step S54: providing a binder, and uniformly mixing the binder with the modified thermochemical heat storage material in step S53;
Step S55: extruding the modified thermochemical heat storage material and the binder uniformly mixed in step S54 to form a thermochemical heat storage module;
Step S56: performing heat exchange between waste heat generated from the calcination in Step S51 and
Step S52 and a heat exchanger, wherein the heat exchanger absorbs heat generated by the calcination and transfers it to the thermochemical heat storage module in Step S55, thereby heating the thermochemical heat storage module to a predetermined temperature; and
Step S57: calcining the thermochemical heat storage module obtained in Step S56.
